**Europäisches Patentamt**

**European Patent Office**

**Office européen des brevets**

(19)

(11) Numéro de publication : **0 592 294 A1**

## (12) DEMANDE DE BREVET EUROPEEN

(21) Numéro de dépôt : **93402429.0**

(22) Date de dépôt : **04.10.93**

(51) Int. Cl.⁵ : **H04B 7/005,** H04L 1/20

(30) Priorité : **07.10.92 FR 9211886**

(43) Date de publication de la demande :
**13.04.94 Bulletin 94/15**

(84) Etats contractants désignés :
**AT BE CH DE DK ES FR GB IT LI NL SE**

(71) Demandeur : **ALCATEL N.V.**
**Strawinskylaan 341, (World Trade Center)**
**NL-1077 XX Amsterdam (NL)**
(84) **BE CH DE DK ES GB IT LI NL SE AT**

(71) Demandeur : **ALCATEL RADIOTELEPHONE,**
**société française**
**12, rue de la Baume**
**F-75008 Paris (FR)**
(84) **FR**

(72) Inventeur : **Mourot, Christophe**
**36, Rue Paul Bert**
**F-92600 Asnieres (FR)**

(74) Mandataire : **Pothet, Jean Rémy Emile Ludovic**
**et al**
**c/o SOSPI 14-16 rue de la Baume**
**F-75008 Paris (FR)**

(54) **Dispositif d'estimation d'un canal de transmission.**

(57)      La présente invention concerne un dispositif d'estimation d'un canal de transmission
      Le dispositif d'estimation (2) d'un canal de transmission (1), de manière connue, reçoit à une extrémité de ce canal (1) une séquence d'entraînement ($r_i$) correspondant à une séquence d'apprentissage ($s_i$) produite à l'autre extrémité du canal (1), génère également la séquence d'apprentissage ($s_i$) et procède à la corrélation des séquences d'apprentissage ($s_i$) et d'entraînement ($r_i$) pour produire un jeu de coefficients de corrélation ($\hat{h}_i$). Selon l'invention, il comprend de plus des moyens de correction pour annuler les coefficients ($\hat{h}_i$) ayant les modules les plus faibles de sorte que la somme des carrés des modules de ces coefficients soit inférieure à une fraction (S) de la somme des carrés des modules de tous les coefficients de corrélation ($\hat{h}_i$).

La présente invention concerne un dispositif d'estimation d'un canal de transmission.

Dans un système de transmission, notamment par ondes radio, un émetteur émet une séquence de symboles dans un canal de transmission à destination d'un récepteur. La séquence émise subit des altérations dans le canal de transmission si bien que la séquence de symboles reçus par le récepteur ne lui est pas identique. La principale de ces altérations est l'interférence entre symboles qui est dûe au fait qu'un symbole émis peut emprunter plusieurs trajets dans le canal de transmission. En effet si deux trajets au moins présentent un écart supérieur à la distance séparant deux symboles émis successivement, un symbole empruntant un de ces trajets va venir interférer avec un symbole suivant empruntant un autre trajet plus court.

Pour corriger l'interférence entre symboles dans le récepteur, on utilise un égaliseur qui, pour fonctionner correctement, doit connaître la réponse impulsionnelle du canal de transmission. A cette fin, des symboles particuliers émis dans une séquence d'apprentissage sont des symboles connus, par opposition aux symboles de données qui font l'objet de la transmission et qui, par hypothèse, ne sont pas connus du récepteur. Il est ainsi courant de prévoir qu'un paquet de symboles destiné à un récepteur particulier comprenne successivement des symboles de données, une séquence d'apprentissage et de nouveau des symboles de données, la séquence d'apprentissage étant ainsi disposée au centre du paquet.

La séquence d'apprentissage est choisie en fonction des caractéristiques du canal de transmission et plus particulièrement en fonction de sa longueur.

En effet, compte-tenu du fait que les symboles sont émis régulièrement et présentent donc une périodicité que l'on nomme durée-symbole, la longueur du canal se définit comme le nombre de durée-symboles qui est équivalent à la différence du trajet le plus long et du trajet le plus court de ce canal.

Pour établir la réponse impulsionnelle du canal, on utilise, dans le récepteur, un dispositif d'estimation de canal qui génère une réplique de cette séquence d'apprentissage et la corrèle avec la séquence correspondante de symboles reçus. Le résultat de la corrélation est un jeu de coefficients $h_i$ où i varie de O à L, L étant la longueur du canal, ce jeu de coefficients étant prévu pour renseigner l'égaliseur. Le trajet le plus direct du canal est représenté par $h_o$, tandis que les autres coefficients représentent les trajets plus longs qui produisent des interférences avec le premier.

Dans le cas le plus général, ces coefficients sont de nature complexe car les symboles reçus peuvent se décomposer sur une base orthogonale en deux composantes, l'une dite "en phase" et l'autre "en quadrature". Par la suite, on conviendra de nommer ce jeu de coefficients réponse impulsionnelle.

Pour tenir compte des conditions de transmission les plus diverses, la longueur du canal L serait théoriquement infinie, mais, pratiquement, c'est une donnée constante, choisie en fonction du système de transmission, que l'on fournit au dispositif d'estimation de canal. Lorsque l'on affecte cette longueur d'une valeur faible, on supprime délibérément les trajets les plus longs du canal, ce qui a pour effet, si ces trajets sont effectivement empruntés, de dégrader les performances de l'égaliseur. En effet, celui-ci n'aura pas toutes les informations reflétant le canal de transmission. Il semblerait donc souhaitable d'affecter la longueur de canal d'une forte valeur. Mais, dans ce cas, on augmente considérablement la complexité de l'égaliseur qu'il fonctionne selon le principe d'une détection symbole par symbole (dont un exemple est connu sous le nom de DFE comme "Decision Feedback Equalizer") ou bien qu'il fonctionne selon le principe du maximum de vraisemblance en estimant une séquence de symboles (dont un exemple est connu sous le nom d'égaliseur de "Viterbi"). En effet, la complexité de l'égaliseur, que l'on assimile ici au nombre d'opérations à effectuer, est directement liée au nombre des coefficients de corrélation.

Ainsi, la demande de brevet WO 92/11 708 propose de supprimer tous les coefficients dont le module est inférieur à une fraction déterminée du module du plus grand de ces coefficients.

Cette solution vise le cas particulier d'un canal ayant un profil selon lequel les seuls trajets significatifs correspondent à des coefficients qui ont sensiblement le même module tous les autres coefficients représentant des trajets qui n'apportent pas d'informations additionnelles. Cette solution n'est pas d'application générale.

La présente invention a donc pour objet un dispositif d'estimation d'un canal de transmission qui, tout en fonctionnant à partir d'une longueur de canal importante, permet de diminuer la complexité de l'égaliseur qu'il renseigne, ceci quel que soit le profil du canal.

Le dispositif d'estimation d'un canal de transmission recevant à une extrémité de ce canal une séquence d'entraînement correspondant à une séquence d'apprentissage produite à l'autre extrémité du canal, générant une réplique de la séquence d'apprentissage et procédant à la corrélation de la séquence d'apprentissage et de la séquence d'entraînement pour produire un jeu de coefficients de corrélation, comprend des moyens de correction pour annuler les coefficients ayant les modules les plus faibles de sorte que la somme des carrés des modules de ces coefficients soit inférieure à une fraction de la somme des carrés des modules de tous les coefficients de corrélation.

Selon une variante de réalisation du dispositif d'estimation d'un canal de transmission, les moyens de correction sont prévus pour annuler un nombre déterminé des coefficients de corrélation en les prenant par ordre de module croissant.

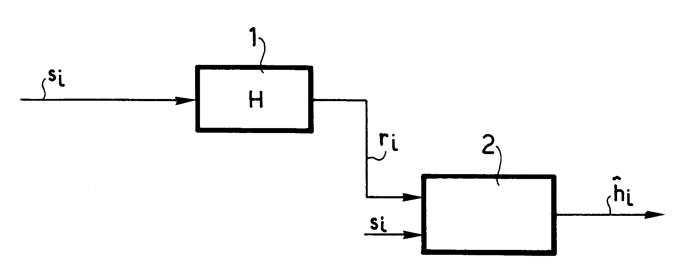

L'invention apparaîtra maintenant de manière plus précise dans le cadre d'exemples de réalisation donnés à titre indicatif en référence à la figure unique qui représente le dispositif d'estimation appliqué à un canal de transmission.

L'invention s'applique dans la plupart des systèmes de transmission, cependant, ces systèmes doivent satisfaire à certaines contraintes que l'on va présenter.

En référence à la figure, le canal de transmission 1 de réponse impulsionnelle H reçoit les symboles émis $s_i$ formant la séquence d'apprentissage et délivre les symboles reçus $r_i$ formant la séquence d'entraînement.

Le dispositif d'estimation 2 du canal de transmission reçoit également la séquence d'apprentissage $s_i$ générée localement et la séquence d'entraînement $r_i$ pour produire une estimation de la réponse impulsionnelle $\hat{H}$ du canal de transmission 1. En notant L la longueur du canal et P la longueur de la séquence d'apprentissage, le dispositif d'estimation 2 doit produire une estimation de la réponse impulsionnelle $\hat{H}$ représentée par les coefficients $\hat{h}_i$, i variant de 0 à L, à partir des symboles émis $s_i$, i variant de 1 à P et des symboles reçus $r_i$, i variant de L+1 à P selon le critère des moindres carrés. Il s'agit donc de minimiser l'erreur quadratique moyenne J :

$$ J = \sum_{i=L+1}^{P} \left| e_i \right|^2 \qquad \text{où} \qquad e_i = r_i - \sum_{k=0}^{L} \hat{h}_k \, s_{i-k} $$

En adoptant les notations suivantes :

$$ \hat{H} = \begin{pmatrix} \hat{h}_0 \\ \hat{h}_1 \\ \cdot \\ \cdot \\ \hat{h}_L \end{pmatrix} \quad , \quad R = \begin{pmatrix} r_{L+1} \\ r_{L+2} \\ \cdot \\ \cdot \\ r_P \end{pmatrix} \quad , \quad E = \begin{pmatrix} e_{L+1} \\ e_{L+2} \\ \cdot \\ \cdot \\ e_P \end{pmatrix} $$

En considérant que l'opérateur de transposition Hermitien est représenté par $.^H$ et que l'opérateur de conjugaison est représenté par $.*$ :

$$ \hat{H}^H = \begin{pmatrix} \hat{h}_0^* & \hat{h}_1^* & \cdot & \cdot & \hat{h}_L^* \end{pmatrix} $$

$$ R^H = \begin{pmatrix} r_{L+1}^* & r_{L+2}^* & \cdot & \cdot & r_P^* \end{pmatrix} $$

$$ E^H = \begin{pmatrix} e_{L+1}^* & e_{L+2}^* & \cdot & \cdot & e_P^* \end{pmatrix} $$

En introduisant la matrice de transmission A et sa transposée Hermitienne $A^H$

$$ A^H = \begin{pmatrix} s_{L+1}^* & s_{L+2}^* & \cdot & \cdot & s_P^* \\ s_L^* & s_{L+1}^* & \cdot & \cdot & s_{P-1}^* \\ \cdot & \cdot & \cdot & \cdot & \cdot \\ \cdot & \cdot & \cdot & \cdot & \cdot \\ s_1^* & s_2^* & \cdot & \cdot & s_{P-L}^* \end{pmatrix} $$

On peut alors écrire :

$$E = R - A^H$$
$$J = E^H E$$

La solution est donnée par l'ensemble des coefficients $\hat{h}_i$ qui annulent la dérivée de l'erreur quadratique moyenne J par rapport à l'estimation de la réponse impulsionnelle $\hat{H}$ :

$$\frac{\partial J}{\partial \hat{H}} = -2A^H R + 2A^H A \hat{H}$$

$$A^H A \hat{H} = A^H R$$

Il apparaît que pour accéder aux coefficients $\hat{h}_i$, il faut que la matrice $A^H A$ soit inversible. Dans ce cas, ces coefficients sont obtenus par l'équation suivante :

$$\hat{H} = (A^H A)^{-1} A^H R$$

La condition d'inversibilité de la matrice $A^H A$ nécessaire pour la mise en oeuvre de l'invention est remplie notamment lorsque la séquence d'apprentissage est une séquence dite CAZAC, abréviation de l'expression anglaise "Constant Amplitude Zero AutoCorrelation". Des séquences de ce type sont décrites dans l'article de A. MILEWSKI : "Periodic sequences with optimal properties for channel estimation and fast start-up equalization", IBM Journal of research & development, vol.27, n°5, sept.83, pages 426-431.

Cette condition d'inversibilité est également remplie lorsque la séquence d'apprentissage est dite pseudo-CAZAC, c'est-à-dire lorsqu'elle se comporte comme une séquence CAZAC au voisinage du pic de corrélation. Parmi les séquences pseudo-CAZAC figurent notamment les séquences utilisées dans le système de radiotéléphone cellulaire numérique européen connu sous le nom de système GSM.

Les coefficients $\hat{h}_i$ étant calculés, l'invention consiste à prévoir des moyens de correction pour annuler le ou les plus faibles d'entre eux, ceux dont la contribution à la réponse impulsionnelle du canal de transmision est la plus basse. Une base de comparaison possible pour cette contribution est, par exemple, la somme des carrés des modules de tous les coefficients $\hat{h}_i$.

Dans un exemple de réalisation de l'invention, on range dans une liste les carrés des modules des coefficients $\hat{h}_i$ par ordre croissant. On calcule également la somme T des carrés des modules de tous les coefficients $\hat{h}_i$. On définit par ailleurs un seuil S au moyen d'un coefficient déterminé C tel que S = CT. On recherche ensuite les p premiers éléments de la liste de sorte que la somme de ces éléments soit inférieure à S et de sorte que la somme de ces p éléments et du (p+1)ième élément de la liste soit supérieure à S. Lorsque le nombre p est déterminé, on force à zéro, c'est-à-dire qu'on annule, les p coefficients $\hat{h}_i$ correspondant aux p premiers éléments de la liste.

On remarquera qu'il n'est pas nécessaire que la liste des carrés des modules soit complète, il suffit qu'elle comprenne p éléments. On peut donc imaginer une procédure où cette liste est établie progressivement, élément par élément, lors de la recherche du nombre p, et où elle est interrompue dès que l'on a trouvé ce nombre p.

Le seuil S ou le coefficient C sont déterminés de manière empirique, par exemple au moyen d'une simulation faisant intervenir un canal de transmission modélisé. L'homme du métier comprend bien qu'il s'agit d'établir un compromis, que le seuil ne doit être ni trop haut ni trop bas, mais doit être ajusté pour optimiser le fonctionnement de l'égaliseur.

Le dispositif de l'invention s'avère d'autant plus efficace que le rapport signal à bruit au niveau du récepteur est faible. A titre d'exemple numérique, on peut fixer la valeur de C à 0,05 pour un rapport signal à bruit inférieur ou égal à 20 dB tandis qu'une valeur de 0,02 peut convenir pour un rapport signal à bruit supérieur à 20 dB.

Le critère retenu pour procèder à l'annulation de certains des coefficients $\hat{h}_i$ donne toute satisfaction. Cependant, on peut imaginer d'autres critères tout en restant dans le cadre de l'invention, notamment :
- supprimer tous les coefficients $\hat{h}_i$ dont le carré du module est inférieur à une fraction déterminée de la somme T des carrés des modules de tous les coefficients,
- supprimer sans aucune condition un nombre déterminé de coefficients $\hat{h}_i$ qui présentent les modules les plus faibles, ce nombre pouvant se réduire à l'unité.

## Revendications

1) Dispositif d'estimation (2) d'un canal de transmission (1) recevant à une extrémité de ce canal (1) une séquence d'entraînement ($r_i$) correspondant à une séquence d'apprentissage ($s_i$) produite à l'autre extrémité du canal (1), générant une réplique de ladite séquence d'apprentissage ($s_i$) et procédant à la corrélation desdites séquences d'apprentissage ($s_i$) et d'entraînement ($r_i$) pour produire un jeu de coefficients de corrélation ($\hat{h}_i$), caractérisé en ce qu'il comprend de plus des moyens de correction pour annuler lesdits coefficients ($\hat{h}_i$) ayant les modules les plus faibles de sorte que la somme des carrés des modules de ces coefficients soit inférieure à une fraction (S) de la somme des carrés des modules de tous les coefficients de corrélation ($\hat{h}_i$).

**2)** Dispositif d'estimation (2) d'un canal de transmission (1)recevant à une extrémité de ce canal (1) une séquence d'entraînement ($r_i$) correspondant à une séquence d'apprentissage ($s_i$) produite à l'autre extrémité du canal (1), générant une réplique de ladite séquence d'apprentissage ($s_i$) et procèdant à la corrélation desdites séquences d'apprentissage ($s_i$) et d'entraînement ($r_i$) pour produire un jeu de coefficients de corrélation ($\hat{h}_i$), caractérisé en ce qu'il comprend de plus des moyens de correction pour annuler un nombre déterminé desdits coefficients de corrélation ($\hat{h}_i$) en les prenant par ordre de module croissant.

$s_i$ → [1 | H] → $r_i$ → [2] → $\hat{h}_i$ ; $s_i$ →

# RAPPORT DE RECHERCHE EUROPEENNE

Office européen des brevets

Numero de la demande
EP 93 40 2429

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| D,A | WO-A-92 11708 (MOTOROLA)<br>* abrégé *<br>* page 6, ligne 13 - page 9, ligne 23 *<br>* revendications 1,2,8 *<br>* figures 4-7 *<br>--- | 1,2 | H04B7/005<br>H04L1/20 |
| A | EP-A-0 496 467 (PHILIPS)<br>* colonne 1, ligne 55 - colonne 3, ligne 40 *<br>* colonne 5, ligne 14 - colonne 8, ligne 18 *<br>* figures 1-5 *<br>--- | 1,2 | |
| A | EP-A-0 496 152 (ROKE MANOR RESEARCH)<br>* colonne 1, ligne 54 - colonne 5, ligne 49 *<br>* figures 1-3 *<br>--- | 1,2 | |
| A | IEEE TRANSACTIONS ON COMMUNICATIONS<br>vol. 38, no. 12 , Décembre 1990 , NEW YORK US<br>pages 2106 - 2113 XP000203341<br>K.PAHLAVAN & J.W.MATTHEWS 'PERFORMANCE OF ADAPTIVE MATCHED FILTER RECEIVERS OVER FADING MULTIPATH CHANNELS'<br>* page 2106, colonne de droite, ligne 40 - page 2107, colonne de droite, ligne 11 *<br>* renvoi 1 en bas de page 2107 *<br>* figures 1,2 *<br>----- | 1,2 | DOMAINES TECHNIQUES RECHERCHES (Int.Cl.5)<br><br>H04B<br>H04L |

Le présent rapport a été établi pour toutes les revendications

| Lieu de la recherche | Date d'achèvement de la recherche | Examinateur |
|---|---|---|
| LA HAYE | 18 Janvier 1994 | LYDON, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P04C02)

7